# EUROPEAN PATENT SPECIFICATION

(11) **EP 3 967 611 B1**
(45) Date of publication and mention of the grant of the patent: **10.01.2024**
(21) Application number: 20195606.7
(22) Date of filing: 10.09.2020
(51) Int. Cl.: B64F 5/10, B25H 1/00, F04B 1/00, B25H 1/02

(54) **ASSEMBLY STATION FOR PISTON ENGINES OF AERONAUTIC TYPE**
MONTAGESTATION FÜR AERONAUTISCHE KOLBENMOTOREN
STATION DE MONTAGE POUR MOTEURS À PISTON DE TYPE AÉRONAUTIQUE

(43) Date of publication of application: 16.03.2022
(73) Proprietor: Robby Moto Engineering S.r.l., 26041 Casalmaggiore (CR) (IT)
(72) Inventor: PAPETTI, Roberto, 26041 Casalmaggiore (CR) (IT)
(74) Representative: Brunacci, Marco

(56) References cited:
- WO-A1-2019/224857
- DE-U1-202017 102 155
- US-A- 5 150 624
- US-B1- 9 256 220

## Description

### Technical Field

The present invention relates to an assembly station for piston engines of aeronautic type.

### Background Art

As it is well known, the assembly of an aeronautic piston engine takes place in special assembly stations where the assembly is mainly carried out manually. Assembly stations of known type comprise a warehouse area, where the engine components are stored, and an assembly area, where these components are assembled.

Specifically, an operator picks up the components from the warehouse area and carries them, through appropriate movement means, to the assembly area where they are subsequently mounted together.

Assembly stations of known type do, however, have some drawbacks.

First of all, the above mentioned assembly stations do not allow verifying in a quick and safe manner the correct execution of the different work stages envisaged.

In particular, the operator in charge of picking up the components from the warehouse verifies only visually if the quantity and type of the picked up components are correct.

It is easy to guess that the above mentioned operator may inadvertently make some mistakes thus making it impossible or difficult to carry out the next assembly phase.

In addition, in case of mistake, it may be necessary to access the warehouse area several times, thus extending the work times and negatively affecting the assembly costs of the engine.

During the assembly phase it is expected that the verification of the correct assembly of the components will be done only through human control, in particular a visual verification is carried out.

Additionally, at least two operators are often required during the assembly phase.

In particular, a first operator manually assembles the components and a second operator visually verifies the correct assembly of the components themselves and issues a paper certificate certifying the correct assembly.

It is easy to guess that the operators used in the assembly phase can make mistakes both during the assembly of the components and during the control of the correct execution of the assembly itself, both phases being entrusted only to human control.

Assembly stations of known type are also known from documents US5150624A, WO2019/224857A1, US9256220B1 and DE202017102155U1.

### Description of the Invention

The main aim of the present invention is to devise an assembly station for piston engines of aeronautic type that allows certifying in a safe and fast manner the correct assembly of an aeronautic engine.

Within the present aim, the above mentioned invention sets itself the purpose to devise an assembly station for piston engines of aeronautic type that allows reducing the time needed and reducing the manpower necessary to carry out the required work.

The above mentioned objects are achieved by the present assembly station for piston engines of aeronautic type having the characteristics of claim 1.

### Brief Description of the Drawings

Other characteristics and advantages of the present invention will be more evident from the description of a preferred, but not exclusive, embodiment of an assembly station for piston engines of aeronautic type, illustrated by way of an indicative, yet non-limiting example, in the attached tables of drawings in which:

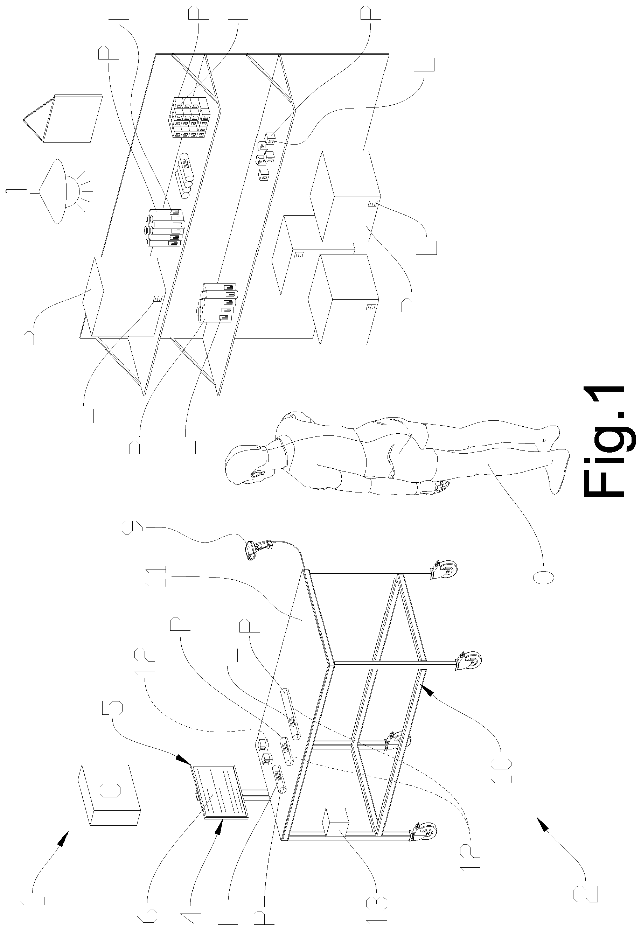

Figure 1 is an axonometric view of a first area of a station according to the invention;

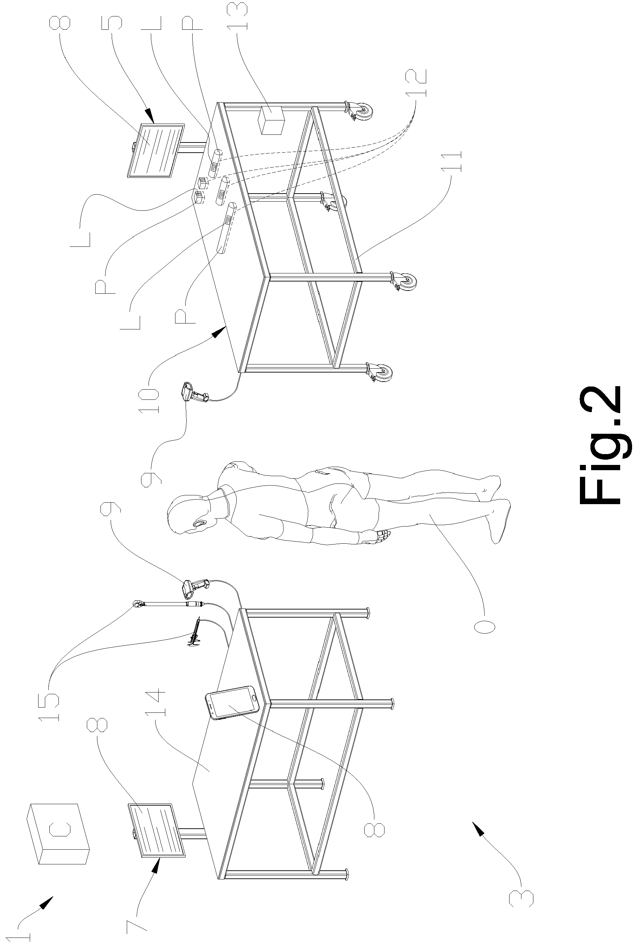

Figure 2 is an axonometric view of a second area of the station according to the invention.

### Embodiments of the Invention

With particular reference to these figures, reference numeral 1 globally indicates an assembly station for piston engines of aeronautic type.

The station 1 comprises at least one first storage area 2 of a plurality of components P of at least one piston engine of aeronautic type.

The plurality of components P comprises:
- at least one cylinder block;
- at least one piston;
- at least one connecting rod element;
- at least one crank element;
- at least one driving shaft.

The station 1 comprises at least one second assembly area 3 of the components P for the manufacture of at least one piston engine of aeronautic type.

According to the invention, the station 1 comprises at least one electronic control assembly 4 adapted to verify the correct pickup of the components P from the first area 2 and the correct assembly of the components P in the second area 3.

Conveniently, the electronic control assembly 4 comprises:
- at least one first electronic data processing device 5 for the correct execution of the pickup of the components P from the first area 2, the first electronic data processing device 5 comprising at least one first user interface 6 and being operationally connected to at least one external data processing unit C;
- at least one second electronic data processing device 7 for the correct execution of the assembly of the components P in the second area 3, the second electronic data processing device 7 comprising at least one second user interface 8 and being operationally connected to the external data processing unit C.

In the ambit of the present discussion it has been assumed, for descriptive simplicity sake, that within the station 1 there is only one operator O assigned both to pick up the components P from the first area 2 and to assemble them in the second area 3.

Different uses of the station 1 cannot however be ruled out wherein the pickup and assembly are carried out by different operators and/or wherein each of the above phases is carried out by a different number of operators.

As will be described in detail below, the operator O uses the first electronic data processing device 5 as a support for the correct pickup of the components P from the first area 2.

Preferably, the first electronic data processing device 5 is of the type of a computer and the first user interface 6 comprises at least one display on which the operator O is shown useful information for the correct pickup of the components P.

Preferably, the display is of the touch-screen type so as to allow the interaction between the operator O and the first electronic data processing device 5. Alternative embodiments are provided wherein the first user interface 6 comprises a keyboard through which the operator O can communicate with the first electronic data processing device 5.

Preferably, the first electronic data processing device 5 is positioned at the first area 2.

Precisely, the station 1 comprises at least one movement assembly 10 of the components P from the first area 2 to the second area 3.

Conveniently, the movement assembly 10 comprises at least one trolley 11 for the containment of the components P when picked up from the first area 2 and for the transport thereof to the second area 3.

In the embodiment shown in the figures, the first electronic data processing device 5 is associated with the trolley 11.

Alternative embodiments cannot however be ruled out wherein the first electronic data processing device 5 is fastened to a fixed structure in the first area 2.

Again, alternative embodiments of the system 1, not shown in the figures, cannot be ruled out, wherein the first electronic data processing device 5 is different and, e.g., is of the type of a mobile device, such as a smart-phone or a tablet, which the operator O can carry by hand.

As will be described in detail below, the operator O uses the second electronic data processing device 7 as a support for the correct execution of the assembly of the components P in the second area 3.

Preferably, the second electronic data processing device 7 is, e.g., of the type of a computer.

The second electronic data processing device 7 is conveniently located in the proximity of the second area 3.

Conveniently, the station 1 comprises at least one assembly bench 14 for assembling the components P, the assembly bench 14 being positioned at the second area 3.

In the particular embodiment shown in the figures the assembly bench 14 is of the type of an equipped table.

In alternative embodiments, not shown in the figures, the assembly bench 14 is made on the trolley 11.

In this case, the operator O moves the trolley 11 from the first area 2 to the second area 3 and directly assembles the components P on the trolley 11.

The second electronic data processing device 7 is associated with the assembly bench 14.

Alternative embodiments cannot however be ruled out wherein the second electronic data processing device 7 is fastened to a fixed structure in the second area 3.

Again, alternative embodiments of the system 1, not shown in the figures, cannot be ruled out, wherein the second electronic data processing device 7 is different and, e.g., is of the type of a mobile device, such as a smart-phone or a tablet, which the operator O can move by hand.

The second user interface 8 comprises at least one display on which the operator O is shown useful information for the correct assembly of the components P and a tablet to allow the operator O to interact with the second electronic data processing device 7.

The external data processing unit C is, e.g., of the type of a remote server and is operationally connected to the electronic control assembly 4, specifically it is connected to the first electronic data processing device 5 and to the second electronic data processing device 7.

Preferably, the communication between the electronic control assembly 4 and the external data processing unit C is via a wireless data transmission device. Conveniently, the external data processing unit C is operationally connected to different electronic control assemblies 4 inserted in different stations 1. Conveniently, the first electronic data processing device 5 is configured to carry out at least one of the following steps:
- receive from the external data processing unit C at least one first list of the components P to be picked up from the first area 2;
- make visible the first list to the operator O through the first user interface 6;
- receive, through the first user interface 6, at least one signal of completed pickup when at least one of the components P has been picked up from the first area 2 by the operator O;
- process the signal of completed pickup and make visible to the operator O, through the first user interface 6:
   - at least one signal of correct pickup when the picked up component P is in the first list;
   - at least one signal of incorrect pickup when the picked up component P is not in the first list;
- delete the correctly picked up component P from the first list;
- process at least one second list of the correctly picked up components P and make it visible to the operator O through the first user interface 6;
- make visible to the operator O, through the first user interface 6, at least one correctly completed pickup signal when each of the components P in the first list has been picked up from the first area 2;
- send the correctly completed pickup signal to the external data processing unit C;
- send the second list to the external data processing unit C.

The operator O, through the first user interface 6, communicates to the first electronic data processing device 5 the type of engine to be assembled.

In turn, the first electronic data processing device 5 communicates this information to the external data processing unit C, which sends it the first list of components P relating to the aforementioned engine to be assembled. Precisely, the first list consists of all and only the components P that must be picked up from the first area 2 to build the required engine.

It is easy to guess how the above mentioned first list is variable according to the type of engine to be assembled and, therefore, the external data processing unit C has as many first lists as the types of engine that can potentially be assembled in the station 1.

The first list appears on the display of the first user interface 6.

This way the operator O can know exactly which components P have to be picked up, thus limiting any possible mistakes during the pickup due to forgetfulness of one or more components.

The electronic control assembly 4 conveniently comprises at least one reading device 9 of at least one identification code L with which each of the components P is provided.

The reading device 9 is operationally connected to the electronic data processing devices 5, 7.

Preferably, the identification code L is of the type of a barcode and the reading device 9 is of the type of a barcode reader.

Alternative embodiments are however provided wherein the identification code L is of a different type, e.g. another automatically readable code, such as a QR code or the like, and is detectable through a special reading device 9, such as e.g. a smart-phone or the like.

In the particular embodiment shown in the figures, the electronic control assembly 4 comprises a plurality of reading devices 9 and, precisely, two reading devices 9 are provided of which one is used in the first area 2 while the other is used in the second area 3.

Precisely, one of the two reading devices 9 is associated with the trolley 11 while the other is associated with the assembly bench 14.

Alternative embodiments, not shown in the figures, are provided wherein the reading devices 9 are fastened to the fixed structures located in the first area 2 and in the second area 3, respectively.

Furthermore, in other embodiments, the reading devices 9 are different and are, e.g., of the portable type.

The reading device 9 in the first area 2 is operationally connected to the first electronic data processing device 5 while the reading device 9 in the second area 3 is operationally connected to the second electronic data processing device 7. When the operator O picks up a component P from the first area 2, they use the reading device 9 in the first area 2 to read the identification code L of the picked up component P which communicates it to the first electronic data processing device 5.

This way, the first electronic data processing device 5 carries out a verification by verifying that the identification code L of the picked up component P is among the identification codes L of the components P in the first list.

In case the picked up component P is among the components P of the first list, it provides the operator O with a positive feedback on the operation carried out, displaying the signal of correct pickup on the first user interface 6.

The operator O places the correctly picked up component P in the trolley 11. At the same time, the first electronic data processing device 5 deletes the correctly picked up component P from the first list and transfers it to the second list, where the correctly picked up components P are listed.

In case the first electronic data processing device 5 finds that the picked up component P is not in the first list, it immediately informs the operator O of the mistake, thus displaying the signal of incorrect pickup on the first user interface 6.

In this case, the operator O repositions the component P in the first area 2.

This way, the operator O knows instantly if they are operating in the correct manner and are able to pick up all and only the components P necessary for the manufacture of the required engine.

Advantageously, the trolley 11 comprises a plurality of housing compartments 12.

Each of the housing compartments 12 is shaped so as to uniquely receive only one of the components P.

In other words, each component P can only be placed in the respective housing compartment 12 and the operator O can visually verify whether a component P is to be picked up or not by verifying the compatibility thereof with at least one housing compartment 12.

The housing compartments 12 are conveniently associated in a removable manner with the fixed structure of the trolley 11 and can be removed from the trolley 11 and be replaced with different types of housing compartments 12 depending on the components P to be housed.

In particular, the first electronic data processing device 5 informs the operator O about the type of housing compartments 12 to be used depending on the type of components P to be picked up from the first area 2.

Advantageously, the station 1 comprises sensor means 13 adapted to detect the weight of the trolley 11, the sensor means 13 being operationally connected to the electronic data processing devices 5, 7.

The external data processing unit C communicates to the first electronic data processing device 5 the weight of the trolley 11 when it contains all and only the components of the first list.

The sensor means 13 detect the weight of the trolley 11 and communicate it to the first electronic data processing device 5 which compares it with the weight communicated thereto by the external data processing unit C.

In case of inequality between the two values, it is easy to guess that mistakes were made by the operator O during the pickup and/or loading of the components P on the trolley 11 and the operator O is informed through the first user interface 6.

If the first electronic data processing device 5 does not detect any anomalies in the weight value of the trolley 11, it informs the operator O about the correct completion of the pickup phase of the components P, thus displaying the signal of correctly completed pickup on the first user interface 6.

At the same time, the signal of correctly completed pickup is also sent to the external data processing unit C in order to officially certify that the pickup of the components P from the first area 2 has been carried out correctly and has been completed.

As an alternative or in combination with the sensor means 13, the station 1 comprises display means (not shown in the figures) adapted to detect an image or a sequence of images of the first area 2 and to send it to the first electronic data processing device 5 in order to carry out a verification on the correct pickup of the components P.

The display means can be, e.g., of the type of a video camera or the like.

At this point, the operator O moves the trolley 11 loaded with the picked up components P from the first area 2 to the second area 3 and assembles them.

The second electronic data processing device 7 is conveniently configured to carry out at least one of the following steps:
- receive the second list from the external data processing unit C and make it visible to the operator O through the second user interface 8;
- receive from the external data processing unit C at least one sequence of assembly phases of the components P comprised in the second list;
- make visible to the operator O, through the second user interface 8, the first of the assembly phases;
- receive, through the second user interface 8, at least one signal of completed assembly when the first assembly phase has been carried out by the operator O;
- process the signal of completed assembly and make visible to the operator O, through the second user interface 8:
   - at least one signal of correct assembly when the first assembly phase has been correctly carried out;
   - at least one signal of incorrect assembly when the first assembly phase has been incorrectly carried out;
- make visible to the operator O, through the second user interface 8, at least one list of the correctly assembled components P;
- delete the correctly assembled component P from the second list;
- make visible to the operator O, through the second user interface 8, the next of the assembly phases only when the previous phase has been correctly carried out;
- send at least one signal of correctly completed assembly to the external data processing unit C when each of the phases has been correctly carried out.

The second electronic data processing device 7 makes visible to the operator O, through the second user interface 8, the first phase that must be carried out to assemble the components P in the second list and positioned on the trolley 11.

In addition, the second electronic data processing device 7 makes visible on the display of the second user interface 8 any drawings and/or assembly diagrams and/or animations that may help the operator O during the execution of the phase shown.

In particular, this additional information is shown upon request of the operator O made through the second user interface 8.

Precisely, the operator O picks up from the trolley 11 the components P to be assembled, according to the indications shown on the second user interface 8, positions them on the assembly bench 14 and proceeds with their assembly.

In addition, the operator O communicates to the second electronic data processing device 7 which component P has picked up from the trolley 11 through the reading device 9 in the second area 3.

This way the second electronic data processing device 7 is able to compare such an identification code L with the identification codes L of the components P in the second list, thus signaling to the operator O any possible mistake when picking up from the trolley 11.

Conveniently, the station 1 comprises:
- blocking/release means of the components P when positioned on the trolley 11;
- actuating means of the blocking/release means operationally connected to the second electronic data processing device 7.

The second electronic data processing device 7 makes available for pickup only the components P which must be assembled according to the assembly phase shown by the second user interface 8, by operating the actuating means.

This way, the operator O picks up from the trolley 11 only the components P which must be assembled, without making mistakes.

After the components P to be assembled have been positioned on the assembly bench 14 the operator O assembles the components P together and informs the second electronic data processing device 7 when the operation has been completed.

The second electronic data processing device 7 verifies that the assembly of the components has been correctly carried out.

Particularly, the station 1 comprises:
- assembly means 15 of the components P; and
- verification means for verifying the correct use of the assembly means 15, the verification means being operationally connected to the second electronic data processing device 7.

The assembly means 15 comprise tools and implements that allow the components P to be associated with each other, possibly by means of coupling elements of the type, e.g., of screws and bolts.

The assembly means 15 comprise, e.g. a digital torque wrench.

When using the digital torque wrench, the operator O exerts, on the coupling elements used, a tightening torque whose nominal value is detected by suitable force sensors on the digital torque wrench.

The verification means conveniently comprise a communication unit operationally interposed between the digital torque wrench and the second electronic data processing device 7.

The communication unit allows transferring the digital tightening torque value from the torque wrench to the second electronic data processing device 7 for the verification thereof.

In particular, the second electronic data processing device 7 compares such a value of the tightening torque with a preset value which is communicated to the second electronic data processing device 7 via the external data processing unit C.

When the second electronic data processing device 7 detects that the value of the tightening torque complies with the preset value, the operator O is informed of the correct execution of the assembly phase carried out.

Furthermore, the verification means comprise a camera that detects an image or a sequence of images from the assembly bench 14 and sends it/them to the second electronic data processing device 7, which is thus able to verify whether the assembly of the components has been carried out correctly and informs the operator O.

If necessary, the second electronic data processing device 7 records the images of the assembly bench 14 to allow future verifications on the assembly phases already carried out.

If necessary, other types of sensor can carry out the same task instead of the video camera.

As soon as the assembly phase is considered to have been correctly carried out, the second electronic data processing device 7 shows the operator O the signal of correct assembly and deletes the correctly assembled components P from the second list and inserts them into the list of correctly assembled components P.

This way, the already assembled components P are no longer visible to the operator O through the second user interface 8, thus limiting any possible mistake.

The second electronic data processing device 7 shows the next assembly phase only when it has sent the signal of correct assembly of the components P as provided in the previous phase.

Substantially, the operator O sees on the second user interface 8 only the assembly phase being carried out.

Usually, when an assembly phase has been correctly carried out, an operator in charge of the certification of the correct execution of the assembly phases can communicate their certification through the second user interface, by affixing a virtual signature.

When all the assembly phases have been correctly carried out, the second electronic data processing device 7 sends the signal of correctly completed assembly to the external data processing unit C.

## Claims

1. Assembly station (1) for piston engines of aeronautic type, comprising:
- at least one first storage area (2) of a plurality of components (P) of at least one piston engine of aeronautic type, said plurality of components (P) comprising:
- at least one cylinder block;
- at least one piston;
- at least one connecting rod element;
- at least one crank element;
- at least one driving shaft;
- at least one second assembly area (3) of said components (P) for the manufacture of at least one piston engine;
- at least one electronic control assembly (4) adapted to verify the correct pickup of said components (P) from said first area (2) and the correct assembly of said components (P) in said second area (3);
**characterized by** the fact that said electronic control assembly (4) comprises:
- at least one first electronic data processing device (5) for the correct execution of the pickup of said components (P) from said first area (2), said first electronic data processing device (5) comprising at least one first user interface (6) and being operationally connected to at least one external data processing unit (C);
- at least one second electronic data processing device (7) for the correct execution of the assembly of said components (P) in said second area (3), said second electronic data processing device (7) comprising at least one second user interface (8) and being operationally connected to said external data processing unit (C);
and by the fact that said assembly station (1) comprises:
- at least one movement assembly (10) of said components (P) from said first area (2) to said second area (3), said movement assembly (10) comprising at least one trolley (11) for the containment of said components (P) when picked up from said first area (2) and for the transport thereof to said second area (3);
- sensor means (13) adapted to detect the weight of said trolley (11), said sensor means (13) being operationally connected to said electronic data processing devices (5, 7) and being configured to communicate the weight of said trolley (11) to said first electronic data processing device (5), said first electronic data processing device (5) being configured to compare the weight of said trolley (11) with the weight communicated thereto by said external data processing unit (C).

2. Station (1) according to claim 1, **characterized by** the fact that said first electronic data processing device (5) is configured to carry out at least one of the following steps:
- receive from said external data processing unit (C) at least one first list of said components (P) to be picked up from said first area (2);
- make visible said first list to at least one operator (O) through said first user interface (6);
- receive, through said first user interface (6), at least one signal of completed pickup when at least one of said components (P) has been picked up from said first area (2) by said operator (O);
- process said signal of completed pickup and make visible to said operator (O), through said first user interface (6):
- at least one signal of correct pickup when said picked up component (P) is in said first list;
- at least one signal of incorrect pickup when said picked up component (P) is not in said first list;
- delete said correctly picked up component (P) from said first list;
- process at least one second list of said correctly picked up components (P) and make it visible to said operator (O) through said first user interface (6);
- make visible to said operator (O), through said first user interface (6), at least one correctly completed pickup signal when each of said components (P) in said first list has been picked up from said first area (2);
- send said correctly completed pickup signal to said external data processing unit (C);
- send said second list to said external data processing unit (C).

3. Station (1) according to one or more of the preceding claims, **characterized by** the fact that said second electronic data processing device (7) is configured to carry out at least one of the following steps:
- receive said second list from said external data processing unit (C) and make it visible to said operator (O) through said second user interface (8);
- receive from said external data processing unit (C) at least one sequence of assembly phases of said components (P) comprised in said second list;
- make visible to said operator (O), through said second user interface (8), the first of said assembly phases;
- receive, through said second user interface (8), at least one signal of completed assembly when said first assembly phase has been carried out by said operator (O);
- process said signal of completed assembly and make visible to said operator (O), through said second user interface (8):
- at least one signal of correct assembly when said first assembly phase has been correctly carried out;
- at least one signal of incorrect assembly when said first assembly phase has been incorrectly carried out;
- make visible to said operator (O), through said second user interface (8), at least one list of said correctly assembled components (P);
- delete said correctly assembled component (P) from said second list;
- make visible to said operator (O), through said second user interface (8), the next of said assembly phases only when the previous phase has been correctly carried out;
- send at least one signal of correctly completed assembly to said external data processing unit (C) when each of said phases has been correctly carried out.

4. Station (1) according to one or more of the preceding claims, **characterized by** the fact that said electronic control assembly (4) comprises at least one reading device (9) of at least one identification code (L) with which each of said components (P) is provided, said reading device (9) being operationally connected to said electronic data processing devices (5, 7).

5. Station (1) according to one or more of the preceding claims, **characterized by** the fact that said identification code (L) is of the type of a barcode and said reading device (9) is of the type of a barcode reader.

6. Station (1) according to claim 1, **characterized by** the fact that said trolley (11) comprises a plurality of housing compartments (12), each of said housing compartments (12) being shaped so as to uniquely receive only one of said components (P).

7. Station (1) according to claim 1, **characterized by** the fact that it comprises:
- blocking/release means of said components (P) when positioned on said trolley (11);
- actuating means of said blocking/release means operationally connected to said second electronic data processing device (7).

8. Station (1) according to one or more of the preceding claims, **characterized by** the fact that it comprises at least one assembly bench (14) for assembling said components (P), said assembly bench (14) being positioned at said second area (3).

9. Station (1) according to one or more of the preceding claims, **characterized by** the fact that said assembly bench (14) is made on said trolley (11).

10. Station (1) according to one or more of the preceding claims, **characterized by** the fact that it comprises:
- assembly means (15) of said components (P); and
- verification means for verifying the correct use of said assembly means (15), said verification means being operationally connected to said second electronic data processing device (7).

## Patentansprüche

1. Montagestation (1) für Kolbenmotoren des Luftfahrt-Typs, umfassend:
- mindestens einen ersten Lagerbereich (2) für eine Vielzahl von Komponenten (P) mindestens eines Kolbenmotors des Luftfahrt-Typs, wobei die Vielzahl von Komponenten (P) umfasst:
- mindestens einen Zylinderblock;
- mindestens einen Kolben;
- mindestens ein Pleuelstangenelement;
- mindestens ein Kurbelelement;
- mindestens eine Antriebswelle;
- mindestens einen zweiten Montagebereich (3) für die genannten Komponenten (P) zur Herstellung mindestens eines Kolbenmotors;
- mindestens eine elektronische Steuereinheit (4), die dazu ausgebildet ist, die korrekte Aufnahme der Komponenten (P) aus dem ersten Bereich (2) und den korrekten Zusammenbau der Komponenten (P) in dem zweiten Bereich (3) zu überprüfen;
**dadurch gekennzeichnet, dass** die elektronische Steuereinheit (4) umfasst:
- mindestens eine erste elektronische Datenverarbeitungseinrichtung (5) für die korrekte Ausführung der Aufnahme der Komponenten (P) aus dem ersten Bereich (2), wobei die erste elektronische Datenverarbeitungseinrichtung (5) mindestens eine erste Benutzerschnittstelle (6) umfasst und in Wirkverbindung mit mindestens einer externen Datenverarbeitungseinheit (C) steht;
- mindestens eine zweite elektronische Datenverarbeitungseinrichtung (7) für die korrekte Ausführung des Zusammenbaus der Komponenten (P) in dem zweiten Bereich (3), wobei die zweite elektronische Datenverarbeitungseinrichtung (7) mindestens eine zweite Benutzerschnittstelle (8) umfasst und in Wirkverbindung mit der externen Datenverarbeitungseinheit (C) steht;
und dadurch, dass die Montagestation (1) umfasst:
- mindestens eine Bewegungseinheit (10) für die Komponenten (P) von dem ersten Bereich (2) zu dem zweiten Bereich (3), wobei die Bewegungseinheit (10) mindestens einen Wagen (11) zur Aufnahme der Komponenten (P) bei deren Aufnahme aus dem ersten Bereich (2) und für deren Transport zu dem zweiten Bereich (3) umfasst,
- Sensormittel (13), die geeignet sind, das Gewicht des Wagens (11) zu erfassen, wobei die Sensormittel (13) in Wirkverbindung mit den elektronischen Datenverarbeitungseinrichtungen (5, 7) stehen und dazu ausgebildet sind, das Gewicht des Wagens (11) an die erste elektronische Datenverarbeitungseinrichtung (5) zu übermitteln, wobei die erste elektronische Datenverarbeitungseinrichtung (5) dazu ausgebildet ist, das Gewicht des Wagens (11) mit dem Gewicht zu vergleichen, das ihr von der externen Datenverarbeitungseinheit (C) übermittelt wird.

2. Station (1) nach Anspruch 1, **dadurch gekennzeichnet, dass** die erste elektronische Datenverarbeitungseinrichtung (5) dazu ausgebildet ist, mindestens einen der folgenden Schritte auszuführen:
- Empfangen mindestens einer ersten Liste der Komponenten (P), die aus dem ersten Bereich (2) aufgenommen werden sollen, von der externen Datenverarbeitungseinheit (C);
- Sichtbarmachen der ersten Liste für mindestens einen Bediener (O) über die erste Benutzerschnittstelle (6);
- Empfangen mindestens eines Signals der abgeschlossenen Aufnahme über die erste Benutzerschnittstelle (6), wenn mindestens eine der Komponenten (P) von dem Bediener (O) aus dem ersten Bereich (2) aufgenommen wurde;
- Verarbeiten des Signals der abgeschlossenen Aufnahme und dem Bediener (O) über die erste Benutzerschnittstelle (6) sichtbar machen:
- mindestens ein Signal für eine korrekte Aufnahme, wenn die aufgenommene Komponente (P) in der ersten Liste enthalten ist;
- mindestens ein Signal für eine fehlerhafte Aufnahme, wenn sich die aufgenommene Komponente (P) nicht in der ersten Liste befindet;
- Löschen der korrekt aufgenommenen Komponente (P) aus der ersten Liste;
- Verarbeiten mindestens einer zweiten Liste der korrekt aufgenommenen Komponenten (P) und Sichtbarmachen dieser Liste für den Bediener (O) über die erste Benutzerschnittstelle (6);
- dem Bediener (O) über die erste Benutzerschnittstelle (6) mindestens ein korrekt abgeschlossenes Aufnahmesignal sichtbar machen, wenn jede der Komponenten (P) in der ersten Liste aus dem ersten Bereich (2) aufgenommen worden ist;
- Senden des korrekt abgeschlossenen Aufnahme-Signals an die externe Datenverarbeitungseinheit (C);
- Senden der zweiten Liste an die externe Datenverarbeitungseinheit (C).

3. Station (1) nach einem oder mehreren der vorhergehenden Ansprüche, **dadurch gekennzeichnet, dass** die zweite elektronische Datenverarbeitungseinrichtung (7) dazu ausgebildet ist, mindestens einen der folgenden Schritte auszuführen:
- Empfangen der zweiten Liste von der externen Datenverarbeitungseinheit (C) und Sichtbarmachen dieser Liste für den Bediener (O) über die zweite Benutzerschnittstelle (8);
- Empfangen mindestens einer Sequenz von Montagephasen der Komponenten (P), die in der zweiten Liste enthalten sind, von der externen Datenverarbeitungseinheit (C);
- dem Bediener (O) über die zweite Benutzerschnittstelle (8) die erste der Montagephasen sichtbar machen,
- über die zweite Benutzerschnittstelle (8) mindestens ein Signal der abgeschlossenen Montage empfangen, wenn die erste Montagephase durch den Bediener (O) ausgeführt wurde;
- Verarbeiten des Signals der abgeschlossenen Montage und dem Bediener (O) über die zweite Benutzerschnittstelle (8) sichtbar machen:
- mindestens ein Signal für eine korrekte Montage, wenn die erste Montagephase korrekt durchgeführt wurde;
- mindestens ein Signal für eine fehlerhafte Montage, wenn die erste Montagephase nicht korrekt ausgeführt wurde;
- für den Bediener (O) über die zweite Benutzerschnittstelle (8) mindestens eine Liste der korrekt montierten Komponenten (P) sichtbar machen,
- Löschen der korrekt montierten Komponente (P) aus der zweiten Liste;
- dem Bediener (O) über die zweite Benutzerschnittstelle (8) die nächste der Montagephasen nur dann sichtbar machen, wenn die vorherige Phase korrekt ausgeführt wurde;
- Senden mindestens eines Signals über eine korrekt abgeschlossene Montage an die externe Datenverarbeitungseinheit (C), wenn jede der Phasen korrekt ausgeführt wurde.

4. Station (1) nach einem oder mehreren der vorhergehenden Ansprüche, **dadurch gekennzeichnet, dass** die elektronische Steuereinheit (4) mindestens eine Lesevorrichtung (9) für mindestens einen Identifikationscode (L) umfasst, mit dem jede der Komponenten (P) versehen ist, wobei die Lesevorrichtung (9) in Wirkverbindung mit den elektronischen Datenverarbeitungseinrichtungen (5, 7) steht.

5. Station (1) nach einem oder mehreren der vorhergehenden Ansprüche, **dadurch gekennzeichnet, dass** der Identifikationscode (L) vom Typ eines Strichcodes ist und die Lesevorrichtung (9) vom Typ eines Strichcodelesers ist.

6. Station (1) nach Anspruch 1, **dadurch gekennzeichnet, dass** der Wagen (11) eine Vielzahl von Aufnahmeabteilen (12) umfasst, wobei jedes der Aufnahmeabteile (12) so geformt ist, dass es nur eine der Komponenten (P) eindeutig aufnehmen kann.

7. Station (1) nach Anspruch 1, **dadurch gekennzeichnet, dass** sie umfasst:
- Mittel zum Blockieren/Freigeben der Komponenten (P), wenn diese auf dem Wagen (11) positioniert sind,
- Betätigungsmittel der Blockier-/Freigabemittel, die in Wirkverbindung mit der zweiten elektronischen Datenverarbeitungseinrichtung (7) stehen.

8. Station (1) nach einem oder mehreren der vorhergehenden Ansprüche, **dadurch gekennzeichnet, dass** sie mindestens eine Montagebank (14) zum Zusammenbau der Komponenten (P) umfasst, wobei die Montagebank (14) in dem zweiten Bereich (3) angeordnet ist.

9. Station (1) nach einem oder mehreren der vorhergehenden Ansprüche, **dadurch gekennzeichnet, dass** die Montagebank (14) auf dem Wagen (11) angeordnet ist.

10. Station (1) nach einem oder mehreren der vorangehenden Ansprüche, **dadurch gekennzeichnet, dass** sie umfasst:
- Montagemittel (15) für die genannten Komponenten (P); und
- Prüfmittel zur Überprüfung der korrekten Verwendung der Montagemittel (15), wobei die Prüfmittel in Wirkverbindung mit der zweiten elektronischen Datenverarbeitungseinrichtung (7) stehen.

## Revendications

1. - Station de montage (1) pour moteurs à piston de type aéronautique, comprenant :
- au moins une première zone de stockage (2) d'une pluralité de composants (P) d'au moins un moteur à piston de type aéronautique, ladite pluralité de composants (P) comprenant :
- au moins un bloc-cylindres ;
- au moins un piston ;
- au moins un élément bielle ;
- au moins un élément manivelle ;
- au moins un arbre d'entraînement ;
- au moins une seconde zone de montage (3) desdits composants (P) pour la fabrication d'au moins un moteur à piston ;
- au moins un ensemble de contrôle électronique (4) agencé pour vérifier le prélèvement correct desdits composants (P) dans ladite première zone (2) et le montage correct desdits composants (P) dans ladite seconde zone (3) ;
**caractérisée par le fait que** l'ensemble de contrôle électronique (4) comprend :
- au moins un premier dispositif électronique de traitement de données (5) pour l'exécution correcte du prélèvement desdits composants (P) dans ladite première zone (2), ledit premier dispositif électronique de traitement de données (5) comprenant au moins une première interface utilisateur (6) et étant connecté de manière fonctionnelle à au moins une unité externe de traitement de données (C) ;
- au moins un second dispositif électronique de traitement de données (7) pour l'exécution correcte du montage desdits composants (P) dans ladite seconde zone (3), ledit second dispositif électronique de traitement de données (7) comprenant au moins une seconde interface utilisateur (8) et étant connecté de manière fonctionnelle à ladite unité externe de traitement de données (C) ;
et **par le fait que** ladite station de montage (1) comprend :
- au moins un ensemble de déplacement (10) desdits composants (P) de ladite première zone (2) à ladite seconde zone (3), ledit ensemble de déplacement (10) comprenant au moins un chariot (11) pour le confinement desdits composants (P) lorsqu'ils sont prélevés dans ladite première zone (2) et pour leur transport jusqu'à ladite seconde zone (3) ;
- des moyens de capteur (13) agencés pour détecter le poids dudit chariot (11), lesdits moyens de capteur (13) étant connectés de manière fonctionnelle aux dispositifs électroniques de traitement de données (5, 7) et étant configurés pour communiquer le poids dudit chariot (11) audit premier dispositif électronique de traitement de données (5), ledit premier dispositif électronique de traitement de données (5) étant configuré pour comparer le poids dudit chariot (11) au poids communiqué à celui-ci par ladite unité externe de traitement de données (C) .

2. - Station (1) selon la revendication 1, **caractérisée par le fait que** ledit premier dispositif électronique de traitement de données (5) est configuré pour mettre en œuvre au moins une des étapes suivantes :
- recevoir, en provenance de ladite unité externe de traitement de données (C), au moins une première liste desdits composants (P) à prélever dans la première zone (2) ;
- rendre visible ladite première liste à au moins un opérateur (O) par l'intermédiaire de ladite première interface utilisateur (6) ;
- recevoir, par l'intermédiaire de ladite première interface utilisateur (6), au moins un signal de prélèvement terminé lorsqu'au moins un desdits composants (P) a été prélevé dans ladite première zone (2) par ledit opérateur (O) ;
- traiter ledit signal de prélèvement terminé et rendre visible audit opérateur (O), par l'intermédiaire de ladite première interface utilisateur (6) :
- au moins un signal de prélèvement correct lorsque ledit composant (P) prélevé se trouve dans ladite première liste ;
- au moins un signal de prélèvement incorrect lorsque ledit composant (P) prélevé ne se trouve pas dans ladite première liste ;
- supprimer ledit composant (P) correctement prélevé de ladite première liste ;
- traiter au moins une seconde liste desdits composants (P) correctement prélevés et la rendre visible audit opérateur (O) par l'intermédiaire de ladite première interface utilisateur (6) ;
- rendre visible audit opérateur (O), par l'intermédiaire de ladite première interface utilisateur (6), au moins un signal de prélèvement correctement terminé lorsque chacun desdits composants (P) de ladite première liste a été prélevé de ladite première zone (2) ;
- envoyer ledit signal de prélèvement correctement terminé à ladite unité externe de traitement de données (C) ;
- envoyer ladite seconde liste à ladite unité externe de traitement de données (C).

3. - Station (1) selon une ou plusieurs des revendications précédentes, **caractérisée par le fait que** ledit second dispositif électronique de traitement de données (7) est configuré pour mettre en œuvre au moins une des étapes suivantes :
- recevoir ladite seconde liste en provenance de ladite unité externe de traitement de données (C) et la rendre visible audit opérateur (O) par l'intermédiaire de ladite seconde interface utilisateur (8) ;
- recevoir, en provenance de ladite unité externe de traitement de données (C), au moins une séquence de phases de montage desdits composants (P) compris dans ladite seconde liste ;
- rendre visible audit opérateur (O), par l'intermédiaire de ladite seconde interface utilisateur (8), la première desdites phases de montage ;
- recevoir, par l'intermédiaire de ladite seconde interface utilisateur (8), au moins un signal de montage terminé lorsque ladite première phase de montage a été mise en œuvre par ledit opérateur (O) ;
- traiter ledit signal de montage terminé et rendre visible audit opérateur (O), par l'intermédiaire de ladite seconde interface utilisateur (8) :
- au moins un signal de montage correct lorsque ladite première phase de montage a été correctement mise en oeuvre ;
- au moins un signal de montage incorrect lorsque ladite première phase de montage a été mal mise en oeuvre ;
- rendre visible audit opérateur (O), par l'intermédiaire de ladite seconde interface utilisateur (8), au moins une liste desdits composants (P) montés correctement ;
- supprimer ledit composant (P) monté correctement de ladite seconde liste ;
- rendre visible audit opérateur (O), par l'intermédiaire de ladite seconde interface utilisateur (8), la prochaine desdites phases de montage uniquement lorsque la phase précédente a été correctement mise en oeuvre ;
- envoyer au moins un signal de montage correctement terminé à ladite unité externe de traitement de données (C) lorsque chacune desdites phases a été correctement mise en oeuvre.

4. - Station (1) selon une ou plusieurs des revendications précédentes, **caractérisée par le fait que** ledit ensemble de contrôle électronique (4) comprend au moins un dispositif de lecture (9) d'au moins un code d'identification (L) dont est pourvu chacun desdits composants (P), ledit dispositif de lecture (9) étant connecté de manière fonctionnelle auxdits dispositifs électroniques de traitement de données (5, 7).

5. - Station (1) selon une ou plusieurs des revendications précédentes, **caractérisée par le fait que** ledit code d'identification (L) est du type code à barres et ledit dispositif de lecture (9) est du type lecteur de code à barres.

6. - Station (1) selon la revendication 1, **caractérisée par le fait que** ledit chariot (11) comprend une pluralité de compartiments de réception (12), chacun desdits compartiments de réception (12) étant conformés de façon à recevoir de manière unique un seul desdits composants (P).

7. - Station (1) selon la revendication 1, **caractérisée par le fait qu'**elle comprend :
- des moyens de blocage/libération desdits composants (P) lorsqu'ils sont positionnés sur ledit chariot (11) ;
- des moyens d'actionnement desdits moyens de blocage/libération connectés de manière fonctionnelle audit second dispositif électronique de traitement de données (7).

8. - Station (1) selon une ou plusieurs des revendications précédentes, **caractérisée par le fait qu'**elle comprend au moins un banc de montage (14) pour monter lesdits composants (P), ledit banc de montage (14) étant positionné à ladite seconde zone (3).

9. - Station (1) selon une ou plusieurs des revendications précédentes, **caractérisée par le fait que** ledit banc de montage (14) est réalisé sur ledit chariot (11) .

10. - Station (1) selon une ou plusieurs des revendications précédentes, **caractérisée par le fait qu'**elle comprend :
- des moyens de montage (15) desdits composants (P) ; et
- des moyens de vérification pour vérifier l'utilisation correcte desdits moyens de montage (15), lesdits moyens de vérification étant connectés de manière fonctionnelle audit second dispositif électronique de traitement de données (7).
